# EUROPEAN PATENT APPLICATION

(11) **EP 4 428 973 A1**
(43) Date of publication of application: **11.09.2024**
(21) Application number: 24151166.6
(22) Date of filing: 10.01.2024
(51) Int. Cl.: H01M 10/04, H01M 50/105, H01M 50/124, H01M 50/186, H01M 50/193, H01M 50/548, H01M 50/553

(54) **LAMINATED BATTERY, BATTERY STACK, AND METHOD FOR MANUFACTURING A LAMINATED BATTERY**

(30) Priority: 06.02.2023 JP 2023016415
(71) Applicant: TOYOTA JIDOSHA KABUSHIKI KAISHA, Toyota-shi, Aichi-ken, 471-8571 (JP)
(72) Inventor: KAKISHITA, Kenichi, Toyota-shi, 471-8571 (JP); CHIHARA, Masashi, Toyota-shi, 471-8571 (JP)
(74) Representative: D Young & Co LLP

(57) **Abstract**

A laminated battery comprises: an electrode body (40); side surface members (20) disposed at side surfaces (fore and aft) of the electrode body (40);a laminate sheet (30) covering the electrode body (40); and side surface resin members (10) mounted to side surfaces (S30), which are at side surface member sides of the laminate sheet (30), wherein the side surface members (20) and the laminate sheet (30) are welded; the laminate sheet (30) has a middle metal layer (31), and the side surface resin members (10) cover the metal layer (31) of the side surfaces (S30) of the laminate sheet (30). This way the metal layer (31) is electrically insulated on all sides.

## Description

### BACKGROUND

### Technical Field

The present disclosure relates to a laminated battery, a battery stack, and a method of manufacturing a laminated battery.

### Related Art

Laminated batteries are known as thin, lightweight batteries. In a laminated battery, an electrode body is accommodated in an exterior body (hereinafter also called laminate exterior body") that uses a laminate sheet.

Japanese Patent Application Laid-Open (JP-A) No. 2019-194949 discloses a laminated battery. As illustrated in Fig. 14, laminated battery 900 disclosed in JP-A No. 2019-194949 has an electrode body 910, a laminate exterior body 920, and a tab film 930.

The electrode body 910 has an electrode body portion 911, a terminal portion 912 that is flat-plate-shaped, and a tab lead portion 913 that electrically connects the electrode body portion 911 and the terminal portion 912. The tab lead portion 913 is mounted to principal surface S912 of the terminal portion 912. The laminate exterior body 920 has a bag-shaped portion 920A that accommodates the electrode body portion 911, and an edge portion 920B that nips and seals the terminal portion 912. At laminate exterior body 920, a thermoplastic resin layer 921, a metal layer 922 and an exterior resin layer 923 are layered in that order. The tab film 930 is formed of a thermoplastic resin. The tab film 930 has a welded portion 930A that is nipped between the terminal portion 912 and the thermoplastic resin layer 921 and welds the terminal portion 912 and the edge portion 920B. Side surface S920, which is at terminal portion 912 side, of the laminate exterior body 920 is exposed.

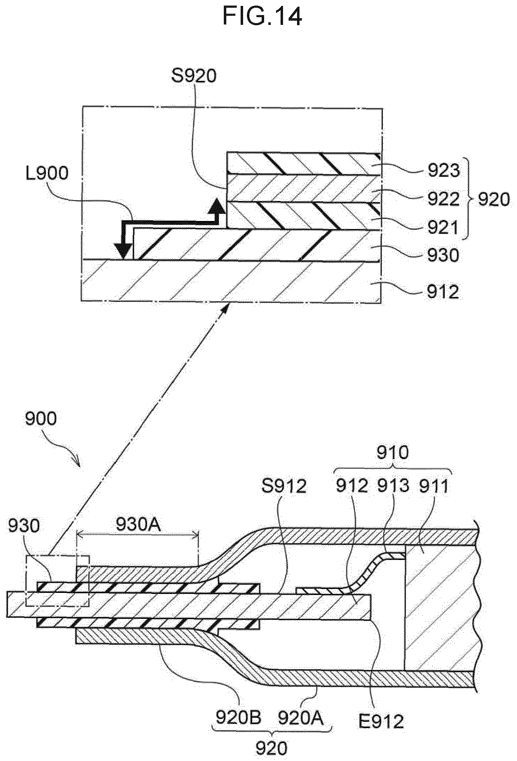

At laminated battery 900 disclosed in JP-A No. 2019-194949, the metal layer 922 of the side surface S920 of the laminate exterior body 920 is exposed. Therefore, in order to ensure the electrical insulation between the terminal portion 912 and the metal layer 922 (e.g., in order to prevent the occurrence of creepage discharge between the terminal portion 912 and the metal layer 922), creepage distance L900 (see Fig. 14) between the terminal portion 912 and the metal layer 922 must be ensured. The creepage distance L900 does not function as a power generating element of the laminated battery 900. Namely, if the creepage distance L900 is ensured, there is the concern that the structural efficiency of the laminated battery will deteriorate. "Structural efficiency" means the proportion of the total volume of the power generating elements contained in the battery, with respect to the total volume of the battery.

### SUMMARY

The present disclosure was made in view of the above-described circumstances. A topic that embodiments of the present disclosure attempt to address is the provision of a laminated battery and a battery stack whose structural efficiency can be improved.

A topic that another embodiment of the present disclosure attempts to address is the provision of a method of manufacturing a laminated battery that can manufacture a laminated battery whose structural efficiency can be improved.

Means for addressing the above topics include the following embodying aspects.
<1> A laminated battery of a first aspect of the present disclosure is a laminated battery including: an electrode body; side surface members disposed at side surfaces of the electrode body; a laminate sheet covering the electrode body; and side surface resin members mounted to side surfaces, which are at side surface member sides, of the laminate sheet, wherein the side surface members and the laminate sheet are welded, the laminate sheet has a metal layer, and the side surface resin members cover the metal layer of the side surfaces of the laminate sheet.

In the present disclosure, "side surfaces, which are at side surface member sides, of the laminate sheet" mean the surfaces that are adjacent to the welded surfaces of the laminate sheet.

In the first aspect, the side surface resin members cover the metal layer (hereinafter also called "side surface metal layer") of the side surfaces, which are at side surface member sides, of the laminate sheet. Therefore, the creepage distances between the side surface members and the side surface metal layer do not have to be considered, and the electrical insulation between the side surface members and the side surface metal layer can be ensured. Namely, the volume of regions that do not function as power generating elements of the laminated battery (e.g., the volume of the region that is needed in order to ensure the creepage distance L900 (see Fig. 14)) can be eliminated. As a result, at laminated battery of the first aspect, the structural efficiency can be improved over that of a conventional laminated battery.

<2> A laminated battery of a second aspect of the present disclosure is the laminated battery of <1>, wherein the side surface members and the laminate sheet are welded directly.

In the present disclosure, "the side surface members and the laminate sheet are welded directly" means that no other member is interposed between the side surface members and the laminate sheet.

In the second aspect, the side surface members and the laminate sheet are welded directly. Therefore, the surface areas of sealing of the side surface members (i.e., the surface areas of contact between the side surface members and the laminate sheet) are greater. Due thereto, penetration of moisture (water vapor) into the electrode body from the exterior of the laminated battery is suppressed. As a result, deterioration of the battery performances of the laminated battery of the second aspect can be suppressed, and the adhesion of the side surface members and the laminate sheet is better.

<3> A laminated battery of a third aspect of the present disclosure is the laminated battery of <1> that further includes resin films disposed between the side surface members and the laminate sheet, wherein the side surface members and the laminate sheet are welded via the resin films.

In the third aspect, the side surface members and the laminate sheet are welded via the resin films. As a result, the mass producibility of the laminated battery of the third aspect is excellent.

<4> A laminated battery of a fourth aspect of the present disclosure is the laminated battery of <3>, wherein the side surface resin members include the resin films.

In the fourth aspect, the side surface resin members include the resin films. Namely, in the fourth aspect, the electrical insulation between the side surface members and the side surface metal layer is ensured by the resin films.

<5> A laminated battery of a fifth aspect of the present disclosure is the laminated battery of <3>, wherein the side surface resin members do not include the resin films.

In the fifth aspect, the side surface resin members do not include the resin films. Namely, in the fifth aspect, the electrical insulation between the side surface members and the side surface metal layer is ensured by the side surface resin members that are different than the resin films.

<6> A laminated battery of a sixth aspect of the present disclosure is the laminated battery of any one of <3> through <5>, wherein the resin films have inner side excess resin portions that project out from ends, which are at electrode body sides, of the side surface members.

In the sixth aspect, the resin films have the inner side excess resin portions that project out from the ends, which are at electrode body sides, of the side surface members. In other words, the laminated battery has spaces that are at sides opposite the laminate sheet sides of the inner side excess resin portions in the thickness direction of the resin films. Due thereto, at the time when the laminated battery is exposed to high temperatures, it is easy for the inner side excess resin portions to volumetrically expand toward the sides opposite the laminate sheet sides of the inner side excess resin portions. Namely, the stress that the laminate sheet receives due to volumetric expansion of the inner side excess resin portions is mitigated more than in conventional structures. As a result, at laminated battery of the sixth aspect, the structural reliability of the laminate sheet is excellent even when the laminated battery is exposed to a high temperature environment.

<7> A laminated battery of a seventh aspect of the present disclosure is the laminated battery of any one of <1> through <6>, wherein the electrode body includes at least one unit electrode body, and the unit electrode body is formed by a positive electrode collector, a positive electrode layer, an electrolyte layer, a negative electrode layer and a negative electrode collector being layered in that order.

In the seventh aspect, the unit electrode body is formed by a positive electrode collector, a positive electrode layer, an electrolyte layer, a negative electrode layer and a negative electrode collector being layered in that order. As a result, the energy density of the laminated battery of the seventh aspect is better.

<8> A laminated battery of an eighth aspect of the present disclosure is the laminated battery of any one of <1> through <7>, wherein the side surface members are terminals, the terminals have facing surfaces that face the side surfaces of the electrode body, and the facing surfaces are electrically connected to the electrode body.

Conventionally, a flat-plate-shaped terminal was used as the terminal. At flat-plate-shaped terminal, the side surface with respect to the principal surface of the terminal was the facing surface, which faced the electrode body, of the terminal. The surface area of the side surface of the terminal was small. Therefore, the electrode body was electrically connected on the principal surface of the terminal.

In the eighth aspect, the terminal has the facing side surface that faces the side surface of the electrode body. This facing surface is electrically connected to the electrode body. Due thereto, in order to electrically connect the terminal and the electrode body, there is no need to sufficiently ensure the length in the direction orthogonal to the facing surface of the terminal (i.e., the length of the principal surface in the direction orthogonal to the facing surface of the conventional, flat-plate-shaped terminal). Namely, in the eighth aspect, the length of the terminal in the direction orthogonal to the facing surface can be made to be shorter than in conventional structures. As a result, the structural efficiency of the laminated battery of the eighth aspect is better.

<9> A laminated battery of a ninth aspect of the present disclosure is the laminated battery of <8> that includes a pair of the terminals that face one another via the electrode body.

<10> A battery stack of a tenth aspect of the present disclosure is a battery stack including: plural laminated batteries of <9> that are stacked along a direction parallel to the side surfaces of the electrode body; and plural inter-battery connecting terminals that are electrically connected to the terminals, and that connect the plural laminated batteries in series.

<11> A method of manufacturing a laminated battery of an eleventh aspect of the present disclosure is a method of manufacturing a laminated battery, wherein the laminated battery has: an electrode body; side surface members disposed at side surfaces of the electrode body; a laminate sheet covering the electrode body; and side surface resin members mounted to side surfaces, which are at side surface member sides, of the laminate sheet, the side surface members and the laminate sheet are welded directly, and the laminate sheet has a metal layer, the method including: forming the side surface resin members, which cover the metal layer of the side surfaces of the laminate sheet, at side surfaces of the laminate sheet; and welding the side surface members and the laminate sheet by a heat bar.

In accordance with the method of manufacturing a laminated battery of the eleventh aspect, a laminated battery, at which deterioration of the battery performances is suppressed and at which the adhesion between the side surface members and the laminate sheet is better, is obtained.

<12> A method of manufacturing a laminated battery of a twelfth aspect of the present disclosure is a method of manufacturing a laminated battery, wherein the laminated battery has: an electrode body; side surface members disposed at side surfaces of the electrode body; a laminate sheet covering the electrode body; and side surface resin members mounted to side surfaces, which are at side surface member sides, of the laminate sheet, and the side surface resin members include resin films disposed between the side surface members and the laminate sheet, the side surface members and the laminate sheet are welded via the resin films, the laminate sheet has a metal layer, and the side surface resin members cover the metal layer of the side surfaces of the laminate sheet, the method including: placing the resin films on the side surface members such that the resin films have projecting portions that project out from the side surfaces of the laminate sheet; welding the side surface members and the laminate sheet via the resin films by a heat bar; and deforming the projecting portions by utilizing residual heat of the resin films at a time when the side surface members and the laminate sheet are welded, and forming the side surface resin members.

In the present disclosure, "utilizing residual heat of the resin films at a time when the side surface members and the laminate sheet are welded" means that the temperature of the resin films is a temperature that is greater than or equal to the glass transition temperature or the softening point of the resin contained in the resin films.

In accordance with the method of manufacturing a laminated battery of the twelfth aspect, a laminated battery whose structural efficiency can be improved can be manufactured efficiently.

In accordance with the present disclosure, there are provided a laminated battery and a battery stack whose structural efficiency can be improved.

In accordance with the present disclosure, there is provided a method of manufacturing a laminated battery that can manufacture a laminated battery whose structural efficiency can be improved.

### BRIEF DESCRIPTION OF THE DRAWINGS

Exemplary embodiments of the present invention will be described in detail based on the following figures, wherein:
Fig. 1 is a perspective view illustrating the exterior of a laminated battery of a first embodiment of the present disclosure;
Fig. 2 is a cross-sectional view along line C2-C2 of the laminated battery of Fig. 1;
Fig. 3 is a partial, enlarged sectional view along line C3-C3 of the laminated battery of Fig. 1;
Fig. 4 is a schematic sectional view illustrating an example of a unit electrode body in the first embodiment of the present disclosure;
Fig. 5 is a perspective view illustrating the exterior of a battery stack of the first embodiment of the present disclosure;
Fig. 6 is a perspective view illustrating the exterior of a laminated battery of a second embodiment of the present disclosure;
Fig. 7 is a cross-sectional view along line C7-C7 of the laminated battery of Fig. 6;
Fig. 8 is a partial, enlarged sectional view along line C8-C8 of the laminated battery of Fig. 6;
Fig. 9 is a drawing for explaining a method of manufacturing a laminated battery of the second embodiment of the present disclosure;
Fig. 10 is a perspective view illustrating the exterior of a laminated battery of a third embodiment of the present disclosure;
Fig. 11 is a cross-sectional view along line C11-C11 of the laminated battery of Fig. 10;
Fig. 12 is a partial, enlarged sectional view along line C12-C12 of the laminated battery of Fig. 10;
Fig. 13 is a perspective view illustrating the exterior of a battery stack of a fourth embodiment of the present disclosure; and
Fig. 14 is a cross-sectional view of a conventional laminated battery.

### DETAILED DESCRIPTION

In the present disclosure, numerical ranges expressed by using "∼" mean ranges in which the numerical values listed before and after the "∼" are included as the minimum value and maximum value, respectively. In numerical value ranges that are expressed in a stepwise manner in the present disclosure, the upper limit value or the lower limit value listed in a given numerical value range may be substituted by the upper limit value or the lower limit value of another numerical value range that is expressed in a stepwise manner. In the present disclosure, combinations of two or more preferable aspects are more preferable aspects. Further, in the present disclosure, "step" is not only an independent step and includes steps that, in a case in which that step cannot be clearly distinguished from another step, achieve the intended object of that step.

Embodiments of the laminated battery, the battery stack, and the method of manufacturing a laminated battery of the present disclosure are described hereinafter with reference to the drawings. In the drawings, same or corresponding portions are denoted by the same reference numerals, and description thereof is not repeated.

### (1) First Embodiment

### (1.1) Laminated Battery

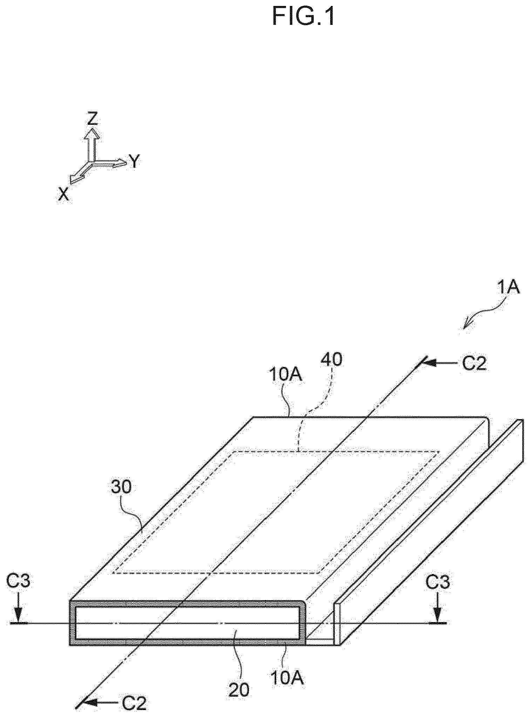

As illustrated in Fig. 1, laminated battery 1A relating to a first embodiment of the present disclosure has side surface resin members 10A, a pair of terminals 20 that are an example of the side surface members, a laminate sheet 30, and an electrode body 40. One of the pair of terminals 20 is a positive electrode terminal, and the another is a negative electrode terminal. The electrode body 40 is a rectangular parallelopiped structure.

In the first embodiment, one side in the length direction of the principal surface of the electrode body 40 is defined as the X-axis positive direction (also called "front side" hereinafter), and the side opposite thereto is defined as the X-axis negative direction (also called "rear side" hereinafter). One side in the short direction of the principal surface of the electrode body 40 is defined as the Y-axis positive direction (also called "right side" hereinafter), and the side opposite thereto is defined as the Y-axis negative direction (also called "left side" hereinafter). One side in the thickness direction of the electrode body 40 is defined as the Z-axis positive direction (also called "upper side" hereinafter), and the side opposite thereto is defined as the Z-axis negative direction (also called "lower side" hereinafter). The X-axis, Y-axis and Z-axis are orthogonal to one another. Note that these directions do not limit the directions at the time when the laminated battery 1A of the present disclosure is used.

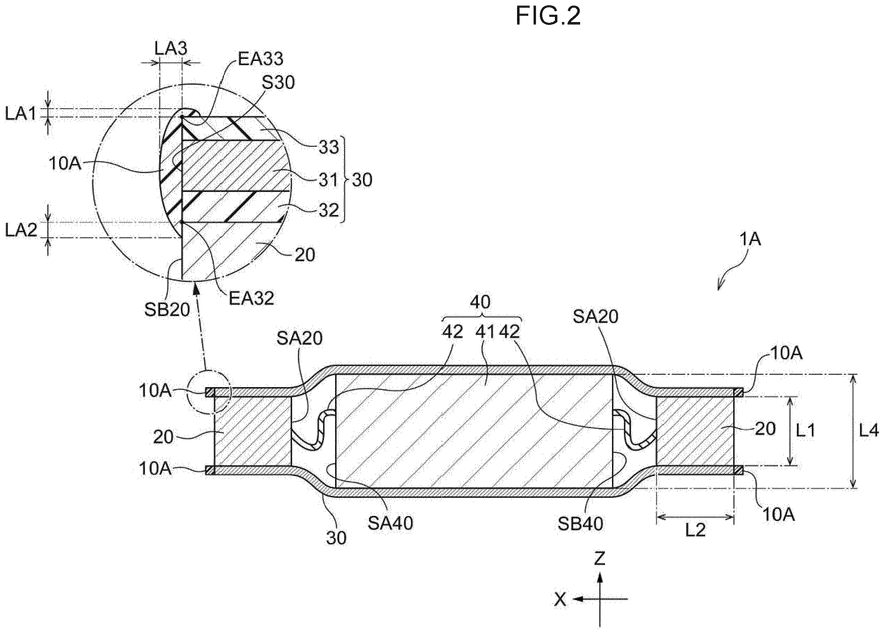

As illustrated in Fig. 2, the pair of terminals 20 are disposed so as to face one another via the electrode body 40. In detail, one of the pair of terminals 20 is disposed at front surface SA40 of the electrode body 40, and another of the pair of terminals 20 is disposed at rear surface SB40 of the electrode body 40. Each of the pair of terminals 20 is electrically connected to the electrode body 40. The laminate sheet 30 covers the electrode body 40. The side surface resin members 10A are mounted to side surfaces S30, which are at terminal 20 sides, of the laminate sheet 30. In detail, the side surface resin members 10A cover the entireties of the side surfaces S30 of the laminate sheet 30. Each of the pair of terminals 20 and the laminate sheet 30 are directly welded. The electrode body 40 is sealed by the pair of terminals 20 and the laminate sheet 30.

In the first embodiment, the laminated battery 1A is a laminated lithium secondary battery that uses a solid electrolyte. Examples of applications of the laminated battery 1A are use as a power source that is installed in a vehicle, a power source for an information processing device (e.g., a personal computer, a smartphone or the like), a power source for electrical storage, and the like.

### (1.1.1) Terminals

The terminals 20 are rectangular parallelopiped structures whose length direction is the left-right direction (the Y-axis direction) and whose short direction is the front-rear direction (the X-axis direction).

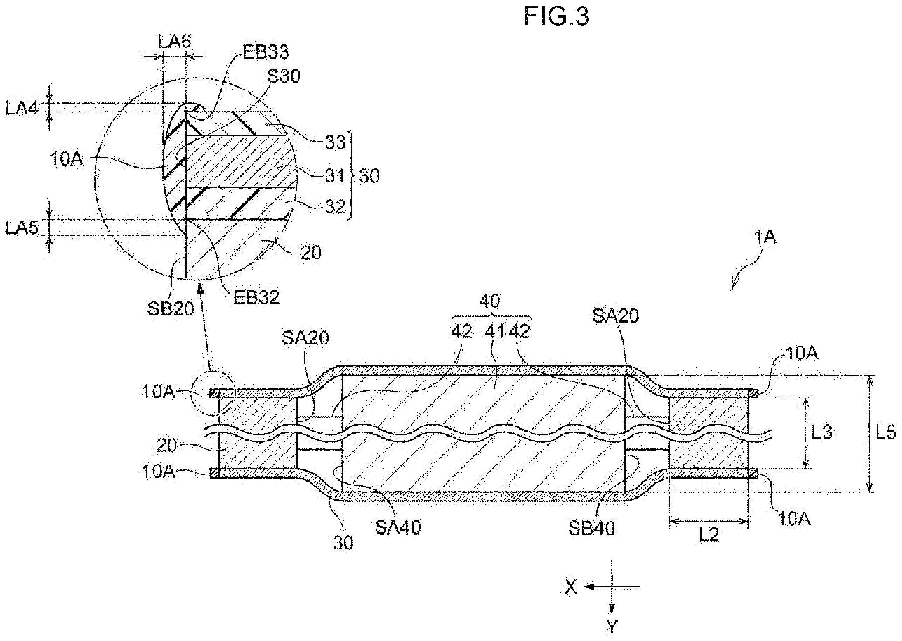

As illustrated in Fig. 2, one of the pair of terminals 20 has a facing surface SA20 that faces the front surface SA40 of the electrode body 40. The another of the pair of terminals 20 has the facing surface SA20 that faces the rear surface SB40 of the electrode body 40. The respective facing surfaces SA20 of the pair of terminals 20 are electrically connected to the electrode body 40. Length L1 (see Fig. 2) in the vertical direction (the Z-axis direction) of the respective facing surfaces SA20 of the pair of terminals 20 is longer than that of a conventional terminal. The length L1 is, for example, greater than or equal to 0.1 cm. Length L2 (see Fig. 2) in the front-rear direction (the X-axis direction) of each of the pair of terminals 20 is shorter than that of a conventional terminal. The length L2 is, for example, less than or equal to 2.0 cm. Length L3 (see Fig. 3) in the left-right direction (the Y-axis direction) of each of the pair of terminals 20 is, for example, greater than or equal to 4.0 cm.
Examples of the material of the terminals 20 are metals (e.g., stainless steel (SUS) and the like), and the like.

### (1.1.2) Laminate Sheet

The laminate sheet 30 covers the electrode body 40 and, together with the pair of terminals 20, seals the electrode body 40. A single laminate sheet is used as the laminate sheet 30. This one laminate sheet 30 is folded-over and functions as a laminate exterior material.

As illustrated in Fig. 2, the laminate sheet 30 has a metal layer 31, a first resin layer 32 and a second resin layer 33. The first resin layer 32, the metal layer 31 and the second resin layer 33 are layered in that order in the vertical direction (the Z-axis direction). The first resin layer 32 is disposed at electrode body 40 side with respect to the second resin layer 33.

The metal layer 31 blocks the entry and exit of gasses (e.g., moisture, air and the like) between the exterior and the interior of the laminated battery 1A. The material of the metal layer 31 is a metal (e.g., aluminum or the like).

The first resin layer 32 can weld the terminals 20 and the laminate sheet 30, and electrically insulates the pair of terminals 20 and the electrode body 40 on the one hand and the metal layer 31 on the other hand. The first resin layer 32 is formed of a first thermoplastic resin composition. The first thermoplastic resin composition contains a first thermoplastic resin. Examples of the first thermoplastic resin are olefin resins (e.g., polypropylene, polyethylene and the like), polyethylene terephthalate, polyvinyl chloride, polyvinylidene chloride, polystyrene resins, acrylonitrile-styrene copolymer (AS) resin, acrylonitrile-butadiene-styrene copolymer (ABS) resin, polyester resins, poly(meth)acrylate resins, polyvinyl alcohol, polycarbonate resins, polyamide resins, polyimide resins, polyester resins, polyacetal resins, fluorine resins, polysulfone resins, polyphenylene sulfide resin, polyketone resins, and the like. Thereamong, it is preferable that the first thermoplastic resin contains polypropylene. The first thermoplastic resin composition may contain compounding agents as needed. Examples of compounding agents are heat stabilizers, oxidation inhibitors, pigments, weatherproofing agents, flame retardants, plasticizers, dispersants, lubricants, mold releasing agents, antistatic agents, and the like.

The second resin layer 33 improves the durability of the laminate sheet 30. The second resin layer 33 is formed of a second thermoplastic resin composition. The second thermoplastic resin composition is not particularly limited, and examples thereof are the same as those exemplified as the first thermoplastic resin. The second thermoplastic resin composition may be the same as or may be different from the first thermoplastic resin composition. In particular, from the standpoint of reliably covering the metal layer 31 of the side surfaces S30 of the laminate sheet 30 by the side surface resin members 10A, the resin that is contained in the second thermoplastic resin preferably has a good affinity with the resin that is contained in the electrically insulating resin composition of the side surface resin members 10A that is described later. In detail, it is preferable that the difference between the melting point or the glass transition temperature of the resin contained in the second thermoplastic resin, and the melting point or the glass transition temperature of the resin contained in the electrically insulating resin composition of the side surface resin members 10A that is described later, is less than or equal to 15°C. The second thermoplastic resin may contain polyethylene terephthalate.

The terminals 20 have outer surfaces SB20 at sides opposite the facing surfaces SA20 in the front-rear direction (the X-axis direction). The side surfaces S30 of the laminate sheet 30 and the outer surfaces SB20 of the terminals 20 are disposed so as to be in the same planes as illustrated in Fig. 2 and Fig. 3. Namely, in the first embodiment, the creepage distance between the metal layer 31 of the laminate sheet 30 and the terminal 20 is 0 mm.

### (1.1.3) Side Surface Resin Member

As illustrated in Fig. 2 and Fig. 3, the side surface resin member 10A electrically insulates the terminal 20 and the metal layer 31 of the side surface S30 of the laminate sheet 30. The side surface resin member 10A covers the metal layer 31 of the side surface S30 of the laminate sheet 30. The side surface resin member 10A welds the first resin layer 32 and the second resin layer 33 of the side surface S30 of the laminate sheet 30, respectively.

As illustrated in Fig. 2, in a cross-section of the laminated battery 1A that is cut along the front-rear direction (the X-axis direction) orthogonal to the front surface SA40 of the electrode body 40, the size of the side surface resin member 10A is preferably the following size.

In the vertical direction (the Z-axis direction), length LA1 (see Fig. 2) of the region of the side surface resin member 10A, which projects-out from end EA33 that is at side opposite the electrode body 40 of the second resin layer 33, is preferably less than 0.1 mm, and is more preferably 0 mm.

In the vertical direction (the Z-axis direction), length LA2 (see Fig. 2) of the region of the side surface resin member 10A, which projects-out from end EA32 that is at electrode body 40 side of the first resin layer 32, is more preferably 0 mm from the standpoint of ensuring that the surface area of contact between the terminal 20 and the laminate sheet 30 is large (i.e., from the standpoint of reliably preventing penetration of the side surface resin member 10A in between the terminal 20 and the laminate sheet 30).

In the front-rear direction (the X-axis direction), length LA3 (see Fig. 2) of the side surface resin member 10A from the side surface S30 of the laminate sheet 30 is preferably less than 1 mm from the standpoint of efficiently connecting the laminated batteries 1A together and the like.

As illustrated in Fig. 3, in a cross-section of the laminated battery 1A that is cut along the front-rear direction (the X-axis direction) orthogonal to the front surface SA40 of the electrode body 40, the size of the side surface resin member 10A is preferably the following size. In the left-right direction (the Y-axis direction), length LA4 (see Fig. 3) of the region of the side surface resin member 10A, which projects-out from end EB33 that is at side opposite the electrode body 40 of the second resin layer 33, is preferably less than 0.1 mm, and is more preferably 0 mm. The length LA4 may be the same as or may be different than the length LA1 (see Fig. 2). In the left-right direction (the Y-axis direction), length LA5 (see Fig. 3) of the region of the side surface resin member 10A, which projects-out from end EB32 that is at electrode body 40 side of the first resin layer 32, is more preferably 0 mm from the standpoint of ensuring that the surface area of contact between the terminal 20 and the laminate sheet 30 is large (i.e., from the standpoint of reliably preventing penetration of the side surface resin member 10A in between the terminal 20 and the laminate sheet 30). The length LA5 may be the same as or may be different than the length LA2 (see Fig. 2).

In the front-rear direction (the X-axis direction), length LA6 (see Fig. 3) of the side surface resin member 10A from the side surface S30 of the laminate sheet 30 is preferably less than 1 mm from the standpoint of efficiently connecting the laminated batteries 1A together and the like. The length LA6 may be the same as or may be different than the length LA3 (see Fig. 2).

The side surface resin member 10A is formed from a cured product of an electrically insulating resin composition (e.g., a photocurable resin composition, a thermosetting resin composition, or a third thermoplastic resin composition). Photocurable resin compositions include compounds having plural photopolymerizable carbon - carbon double bonds (e.g., (meth)acrylic resin compositions, epoxy resin compositions, and the like), and, as needed, may contain a photopolymerization initiator (e.g., benzophenone-based, anthraquinone-based and the like). Thermosetting resin compositions include resins (e.g., acrylic resins or polyester resins) containing two or more crosslinkable functional groups (e.g., hydroxyl group, epoxy group, isocyanate group or carboxyl group) in one molecule, and, as needed, may contain a crosslinking agent (e.g., an amino resin, a polyisocyanate compound or a carboxyl-group-containing compound) and the like. Examples of the third thermoplastic resin composition are the same as those exemplified as the first thermoplastic resin. The third thermoplastic resin composition may be the same as or may be different than the first thermoplastic resin composition. Thereamong, in the first embodiment, it is preferable that the third thermoplastic resin composition is the same as the first thermoplastic resin composition, from the standpoint of ensuring the adhesion of the terminals 20, and the like.

### (1.1.4) Electrode Body

The electrode body 40 functions as the power generating element of the laminated battery 1A.

The electrode body 40 has plural unit electrode bodies 41 and a pair of collector tabs 42. One of the pair of collector tabs 42 is a positive electrode collector tab and is electrically connected to the positive electrode terminal. The another of the pair of collector tabs 42 is a negative electrode collector tab and is electrically connected to the negative electrode terminal. Each of the pair of collector tabs 42 is electrically connected to the plural unit electrode bodies 41.

The plural unit electrode bodies 41 are rectangular parallelopiped structures. In the first embodiment, length L4 (see Fig. 2) of the plural unit electrode bodies 41 in the vertical direction (the Z-axis direction) is longer than the length L1 (see Fig. 2) of the respective facing surfaces SA20 of the pair of terminals 20 in the vertical direction (the Z-axis direction). Length L5 (see Fig. 3) of the plural unit electrode bodies 41 in the left-right direction (the Y-axis direction) is longer than the length L3 (see Fig. 3) of the respective facing surfaces SA20 of the pair of terminals 20 in the left-right direction (the Y-axis direction).

### (1.1.4.1) Battery Structure

The unit electrode bodies 41 include so-called all-solid-state batteries that use an inorganic solid electrolyte as the electrolyte, and the solid electrolyte may include an electrolyte liquid in an amount of less than 10 mass% with respect to the entire amount of the electrolyte. Note that the solid electrolyte may be a composite solid electrolyte containing an inorganic solid electrolyte and a polymer electrolyte.

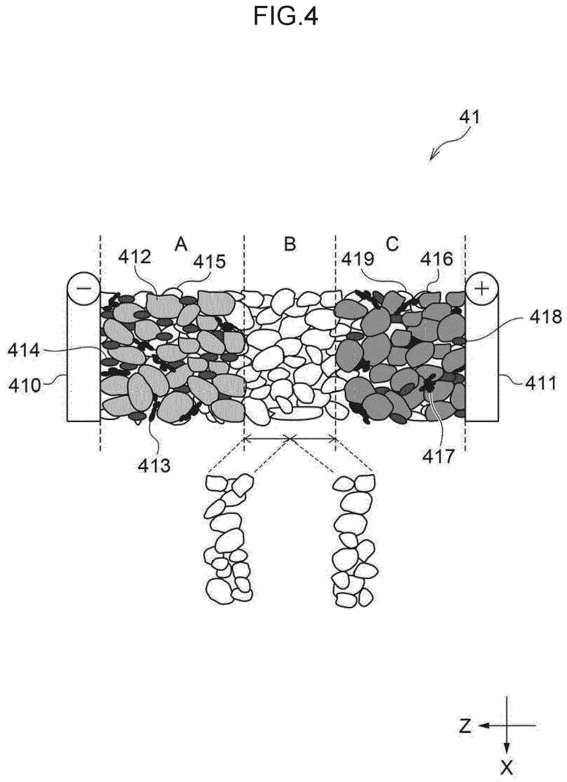

The structure of the unit electrode body 41 may be a structure in which a positive electrode collector, a positive electrode layer, a solid electrolyte layer, a negative electrode layer, and a negative electrode collector are layered in that order along the vertical direction (the Z-axis direction), e.g., may be the structure illustrated in Fig. 4. Solid electrolyte layer B in Fig. 4 may be a two-layer structure. Fig. 4 is a schematic sectional view illustrating an example of the unit electrode body 41. The unit electrode body 41 illustrated in Fig. 4 has a negative electrode including a negative electrode collector 410 and a negative electrode layer A, the solid electrolyte layer B, and a positive electrode including a positive electrode collector 411 and a positive electrode layer C. The negative electrode layer A contains negative electrode active material 412, conduction assistant 413, binder 414 and solid electrolyte 415. The positive electrode layer C contains positive electrode active material 416, conduction assistant 417, binder 418 and solid electrolyte 419.

The plural unit electrode bodies 41 may be connected in series or may be connected in parallel.

The plural unit electrode bodies 41 may be structured such that the layer end surfaces (side surfaces) of a layered structure of a positive electrode layer / a solid electrolyte layer / a negative electrode layer are sealed by a resin.

### (1.1.4.1.1) Solid Electrolyte Layer

The unit electrode body 41 has a solid electrolyte layer. The solid electrolyte layer preferably contains at least one selected from the group consisting of sulfide solid electrolytes, oxide solid electrolytes, and halide solid electrolytes.

The sulfide solid electrolyte preferably contains sulfur (S) as the main component that is an anion element, and further, preferably contains, for example, the element Li and element A. Element A is at least one type selected from the group consisting of P, As, Sb, Si, Ge, Sn, B, Al, Ga and In. The sulfide solid electrolyte may further contain at least one of O and a halogen element. Examples of the halogen element (X) are F, Cl, Br, I and the like. The composition of the sulfide solid electrolyte is not particularly limited, and examples are xLi₂S•(100-x)P₂S₅ (70≤x≤80) and yLiI•zLiBr•(100-y-z)(xLi₂S•(1-x)P₂S₅) (0.7≤x≤0.8, 0≤y≤30, 0≤z≤30). The sulfide solid electrolyte may have the composition expressed by following general formula (1).

formula (1): Li₄₋ₓGe₁₋ₓPₓS₄ (0<x<1)

In formula (1), at least some of the Ge may be substituted by at least one selected from the group consisting of Sb, Si, Sn, B, Al, Ga, In, Ti, Zr, V and Nb. Further, at least some of the P may be substituted by at least one selected from the group consisting of Sb, Si, Sn, B, Al, Ga, In, Ti, Zr, V and Nb. Some of the Li may be substituted by at least one selected from the group consisting of Na, K, Mg, Ca and Zn. Some of the S may be substituted by a halogen. The halogen is at least one of F, Cl, Br and I.

The oxide solid electrolyte preferably contains oxygen (O) as the main component that is an anion element, and, for example, may contain Li, element Q (Q represents at least one of Nb, B, Al, Si, P, Ti, Zr, Mo, W and S), and O. Examples of the oxide solid electrolyte are garnet type solid electrolytes, perovskite type solid electrolytes, NASICON type solid electrolytes, Li-P-O solid electrolytes, Li-B-O solid electrolytes, and the like. Examples of garnet type solid electrolytes are Li₇La₃Zr₂O₁₂, Li₇₋ₓLa₃(Zr₂₋ₓNbₓ)O₁₂ (0≤x≤2), Li₅La₃Nb₂O₁₂, and the like. Examples of perovskite type solid electrolytes are (Li,La)TiO₃, (Li,La)NbO₃, (Li,Sr)(Ta,Zr)O₃ and the like. Examples of NASICON type solid electrolytes are Li(Al,Ti)(PO₄)₃, Li(Al,Ga)(PO₄)₃, and the like. Examples of Li-P-O solid electrolytes are Li₃PO₄ and LIPON (compounds in which some of the O in Li₃PO₄ is substituted with N). Examples of Li-B-O solid electrolytes are Li₃BO₃, compounds in which some of the O in Li₃BO₃ is substituted with C, and the like.

As the halide solid electrolyte, solid electrolytes containing Li, M and X (M represents at least one of Ti, Al and Y, and X represents F, Cl or Br) are suitable. Specifically, Li_{6-3z}Y_{z}X₆ (X represents Cl or Br, and z satisfies 0<z<2) and Li_{6-(4-x)b}(Ti₁₋ₓAlₓ)_{b}F₆ (0<x<1, 0<b≤1.5) are preferable. Among Li_{6-3z}Y_{z}X₆, from the standpoint of having excellent lithium ion conductivity, Li₃YX₆ (X represents Cl or Br) is more preferable, and Li₃YCl₆ is even more preferable. Further, from standpoints such as, for example, suppressing oxidative decomposition of the sulfide solid electrolyte and the like, it is preferable that Li_{6-(4-x)b}(Ti₁₋ₓAlₓ)_{b}F₆ (0<x<1, 0<b≤1.5) be contained together with a solid electrolyte such as a sulfide solid electrolyte or the like.

The solid electrolyte layer may be a single-layer structure, or may be a multilayer structure of two or more layers.

The solid electrolyte layer may contain a binder, or may not contain a binder. Examples of binders that can be contained in the solid electrolyte layer are vinyl halide resins, rubbers, polyolefin resins, and the like. Examples of vinyl halide resins are polyvinylidene fluoride (PVdF), the copolymer (PVdF-HFP) of polyvinylidene fluoride and hexafluoropropylene, and the like. Examples of polyolefin resins are butadiene rubber (BR), acrylate-butadiene rubber (ABR), styrene-butadiene rubber (SBR), acrylonitrile-butadiene rubber (NBR), butyl rubber (isobutylene-isoprene rubber), and the like. Examples of polyolefin resins are polyethylene, polypropylene, and the like. The binder may be a diene rubber containing a double bond in the main chain, e.g., butadiene rubber in which 30 mol% or more of the entire amount is butadiene.

### (1.1.4.1.2) Positive Electrode Layer

The unit electrode body 41 has a positive electrode layer. The positive electrode layer contains a positive electrode active material. As needed, the positive electrode layer may contain at least one of a solid electrolyte for the positive electrode, a conduction assistant and a binder.

It is preferable that a lithium composite oxide be contained as the positive electrode active material. The lithium composite oxide may contain at least one type selected from the group consisting of F, Cl, N, S, Br and I. Further, the lithium composite oxide may have a crystal structure belonging to at least one space group selected from space groups R-3m, Immm, and P63-mmc (also called P63mc, P6/mmc). In the lithium composite oxide, the main sequence of a transition metal, oxygen and lithium may be an O2-type structure.

Examples of lithium composite oxides having a crystal structure belonging to R-3m are compounds expressed by LiₓMe_{y}O_{α}X_{β}(Me represents at least one type selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si and P, and X represents at least one type selected from the group consisting of F, Cl, N, S, Br and I, and 0.5≤x≤1.5, 0.5≤y≤1.0, 1≤α<2, 0<β≤1 are satisfied).

Examples of lithium composite oxides having a crystal structure belonging to Immm are composite oxides expressed by Liₓ₁M¹A¹₂ (1.5≤x1≤2.3 is satisfied, M¹ includes at least one type selected from the group consisting of Ni, Co, Mn, Cu and Fe, A¹ includes at least oxygen, and the ratio of the oxygen contained in A¹ is greater than or equal to 85 atom%) (a specific example is Li₂NiO₂), and composite oxides expressed by Liₓ₁M^{1A}₁₋ₓ₂M^{1B}ₓ₂O_{2-y}A²_{y} (0≤x2≤0.5 and 0≤y≤0.3, at least one of x2 and y is not 0, M^{1A} represents at least one type selected from the group consisting of Ni, Co, Mn, Cu and Fe, M^{1B} represents at least one type selected from the group consisting of Al, Mg, Sc, Ti, Cr, V, Zn, Ga, Zr, Mo, Nb, Ta and W, and A2 represents at least one type selected from the group consisting of F, Cl, Br, S and P).

Examples of lithium composite oxides having a crystal structure belonging to P63-mmc are composite oxides expressed by M1ₓM2_{y}O₂ (M1 represents an alkali metal (at least one of Na and K is preferable), M2 represents a transition metal (at least one type selected from the group consisting of Mn, Ni, Co and Fe is preferable), and x+y satisfies 0<x+y≤2).

Examples of lithium composite oxides having an O2-type structure are composite oxides expressed by Liₓ[Li_{α}(MnₐCo_{b}M_{c})_{1-α}]O₂ (0.5<x<1.1, 0.1<α<0.33, 0.17<a<0.93, 0.03<b<0.50, 0.04<c<0.33, and M represents at least one type selected from the group consisting of Ni, Mg, Ti, Fe, Sn, Zr, Nb, Mo, W and Bi). Specific examples are Li_{0.744}[Li_{0.145}Mn_{0.625}Co_{0.115}Ni_{0.115}]O₂ and the like.

The solid electrolyte for the positive electrode preferably contains one selected from the group consisting of sulfide solid electrolytes, oxide solid electrolytes and halide solid electrolytes. Examples of the sulfide solid electrolytes are the same as those exemplified as the sulfide solid electrolytes that are contained in the solid electrolyte. Examples of the oxide solid electrolytes are the same as those exemplified as the oxide solid electrolytes that are contained in the solid electrolyte. Examples of the halide solid electrolytes are the same as those exemplified as the halide solid electrolytes that are contained in the solid electrolyte.

Examples of the conduction assistant are carbon materials, metal materials, and conductive polymer materials. Examples of the carbon materials are carbon black (e.g., acetylene black, furnace black, ketjen black, and the like), filamentous carbon (e.g., vapor grown carbon fibers, carbon nanotubes, carbon nanofibers, and the like), graphite, fluorocarbons, and the like. Examples of the metal materials are metal powders (e.g., aluminum powder and the like), conductive whiskers (e.g., zinc oxide, potassium titanate, and the like), conductive metal oxides (e.g., titanium oxide and the like), and the like. Examples of the conductive polymer materials are polyaniline, polypyrrole, polythiophene, and the like. One type of conduction assistant may be used alone, or two or more types may be used by being mixed together.

Examples of the binder are the same as those exemplified as binders that are contained in the solid electrolyte layer.

### (1.1.4.1.3) Positive Electrode Collector

The unit electrode body 41 has a positive electrode collector. The positive electrode collector carries out power collection of the positive electrode layer. The positive electrode collector is disposed at a position at side of the positive electrode layer, which side is opposite the side at which the solid electrolyte layer is located.

Examples of the positive electrode collector are stainless steel, aluminum, copper, nickel, iron, titanium, carbon and the like, and an aluminum alloy foil or an aluminum foil is preferable. The aluminum alloy foil or aluminum foil may be manufactured by using a powder. Examples of the form of the positive electrode collector are the form of a foil and the form of a mesh.

The positive electrode collector may be a structure in which a shock-absorbing layer, an elastic layer or a PTC (Positive Temperature Coefficient) thermistor layer is disposed on the surface of the collector.

### (1.1.4.1.4) Negative Electrode Layer

The unit electrode body 41 has a negative electrode layer. The negative electrode layer contains a negative electrode active material. The negative electrode layer may, as needed, contain at least one of a solid electrolyte for the negative electrode, a conduction assistant, and a binder. Examples of the negative electrode active material are Li-based active materials such as metallic lithium and the like, carbon-based active materials such as graphite and the like, oxide-based active materials such as lithium titanate and the like, and Si-based active materials such as elemental Si and the like. Examples of the conduction assistant, the solid electrolyte for the negative electrode, and the binder that are used in the negative electrode layer are the same as those exemplified as the conduction assistant contained in the positive electrode layer, the solid electrolyte contained in the solid electrolyte layer, and the binder.

### (1.1.4.1.5) Negative Electrode Collector

The unit electrode body 41 has a negative electrode collector. The negative electrode collector carries out power collection of the negative electrode layer. The negative electrode collector is disposed at a position at side of the negative electrode layer, which side is opposite the side at which the solid electrolyte layer is located.

Examples of the negative electrode collector are stainless steel, aluminum, copper, nickel, iron, titanium, carbon and the like, and copper is preferable. Examples of the form of the negative electrode collector are the form of a foil and the form of a mesh. The negative electrode collector may be a structure in which a shock-absorbing layer, an elastic layer or a PTC (Positive Temperature Coefficient) thermistor layer is disposed on the surface of the collector.

### (1.1.5) Operation and Effects

As illustrated in Fig. 1 through Fig. 4, the laminated battery 1A has the electrode body 40, the pair of terminals 20, the laminate sheet 30 and the side surface resin members 10A. The pair of terminals 20 and the laminate sheet 30 are welded. The side surface resin members 10A cover the metal layer 31 of the side surfaces S30 of the laminate sheet 30.

Due thereto, the creepage distances between the pair of terminals 20 and the metal layer 31 of the side surfaces S30 of the laminate sheet 30 do not have to be taken into consideration, and the electrical insulation between the pair of terminals 20 and the metal layer 31 of the side surfaces S30 of the laminate sheet 30 can be ensured. Namely, the volume of regions that do not function as power generating elements of the laminated battery 1A (e.g., the volume of the region that is needed in order to ensure the creepage distance L900 (see Fig. 14)) can be eliminated. As a result, at laminated battery 1A, the structural efficiency can be improved over that of a conventional laminated battery.

As described with reference to Figs. 1 through 4, at laminated battery 1A, the pair of terminals 20 and the laminate sheet 30 are directly welded.
Namely, the surface areas of sealing of the pair of terminals 20 (i.e., the surface areas of contact between the pair of terminals 20 and the laminate sheet 30) are greater. Due thereto, penetration of moisture (water vapor) into the electrode body 40 from the exterior of the laminated battery 1A is suppressed. As a result, deterioration of the battery performances of the laminated battery 1A can be suppressed, and the adhesion of the pair of terminals 20 and the laminate sheet 30 is better.

As described with reference to Fig. 1 through Fig. 4, at laminated battery 1A, the electrode body 40 includes plural unit electrode bodies. At unit electrode body, a positive electrode collector, a positive electrode layer, an electrolyte layer, a negative electrode layer and a negative electrode collector are layered in that order.

Due thereto, the energy density of the laminated battery 1A is better.

As described above with reference to Fig. 1 through Fig. 4, at laminated battery 1A, the facing surfaces SA20 of the terminals 20 are electrically connected to the electrode body 40. Due thereto, in order to electrically connect the terminals 20 and the electrode body 40, there is no need to sufficiently ensure the length L2 (see Fig. 2 and Fig. 3) in the front-rear direction (the X-axis direction) that is orthogonal to the facing surfaces SA20 of the terminals 20. Namely, the length L2 of the terminals 20 in the front-rear direction (the X-axis direction) can be made to be shorter than in conventional structures. As a result, the structural efficiency of the laminated battery 1A is better.

### (1.2) Battery Stack

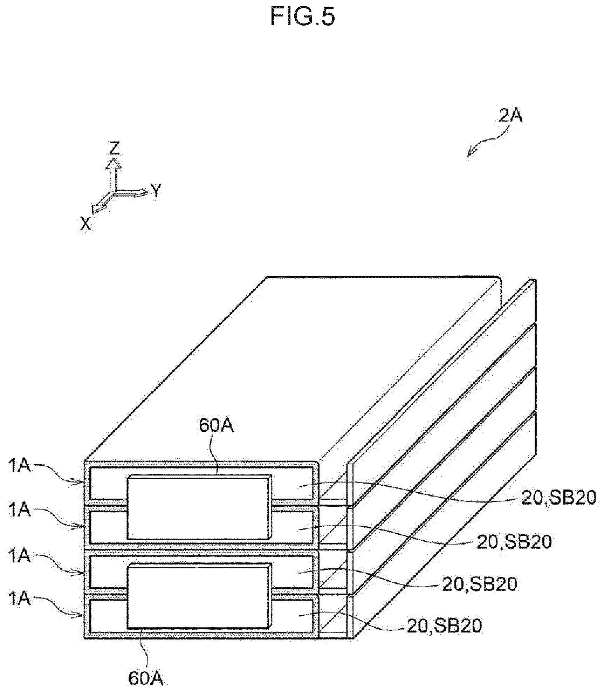

As illustrated in Fig. 5, a battery stack 2A relating to the first embodiment of the present disclosure has the plural laminated batteries 1A and plural inter-battery connecting terminals 60A. The plural laminated batteries 1A are stacked along the vertical direction (the Z-axis direction) that is parallel to the front surfaces SA40 of the electrode bodies 40. The plural inter-battery connecting terminals 60A are electrically connected to the terminals 20, and connect the plural laminated batteries 1A in series.

The inter-battery connecting terminals 60A are parts (bus bars) for electrically connecting the plural laminated batteries 1A in series. The inter-battery connecting terminal 60A is a single plate-shaped structure.

The terminal 20 of the laminated battery 1A has the outer surface SB20 at side opposite the facing surface SA20 in the front-rear direction (the X-axis direction). The inter-battery connecting terminal 60A is mounted to the outer surface SB20 of the terminal 20. The method of mounting the inter-battery connecting terminal 60A is not particularly limited, and examples are methods that use parts for fastening, and welding and the like. Parts for fastening include bolts, nuts, screws, rivets and pins. Welding includes metal welding and soldering.

The material of the inter-battery connecting terminals 60A is metal (e.g., stainless steel or the like).

### (1.3) Method of Manufacturing Laminated Battery

The method of manufacturing a laminated battery of the first embodiment of the present disclosure is a method of manufacturing the laminated battery 1A. The method of manufacturing a laminated battery of the first embodiment includes a preparation step, a covering step, a fixing step, a forming step and a welding step. In the first embodiment, the preparation step, the covering step, the fixing step, the forming step and the welding step are executed in that order.

### (1.3.1) Preparation Step

In the preparation step, a structural body and the one laminate sheet 30 are prepared. The structural body has the electrode body 40 and the pair of terminals 20 that are electrically connected to the electrode body 40. It suffices for the methods of preparing the structural body and the laminate sheet 30 respectively to be known methods.

### (1.3.2) Covering Step

In the covering step, the laminate sheet 30 is bent, and the electrode body 40 contained in the structural body is covered by the one laminate sheet 30. The method of covering the electrode body 40 by the laminate sheet 30 is not particularly limited. For example, the method may be a method in which creases that match the shape of the electrode body 40 are formed in the laminate sheet 30 by a known method, and the laminate sheet 30 is folded along the creases.

### (1.3.3) Fixing Step

In the fixing step, a region at which the end portions of the folded laminate sheet 30 overlap one another (hereinafter also called "overlapping region") is thermocompression bonded, and the shape of the laminate sheet 30, which is in a state of covering the electrode body 40, is fixed. It suffices for the method of thermocompression bonding the overlapping region to be a known method, and an example is a method using a heat bar.

### (1.3.4) Forming Step

In the forming step, the side surface resin members 10A are formed at side surfaces S30 of the laminate sheet 30.

The method of forming the side surface resin members 10A is not particularly limited, and examples thereof are a first method, a second method and the like.

The first method includes coating a photocurable resin composition (i.e., an example of the above-described electrically insulating resin composition of the side surface resin members 10A) on the side surfaces S30 of the laminate sheet 30 so as to form photocurable coated films, and illuminating light onto the photocurable resin films so as to form the side surface resin members 10A. The method of coating the photocurable resin composition is not particularly limited, and examples are a method using a dispenser, a method using an inkjet device, a spray coating method, and the like. It suffices for the light that is illuminated to be an active energy beam (e.g., visible light, ultraviolet light, X-rays, an electron beam or the like), and the light is selected appropriately in accordance with the type of the photocurable resin composition and the like. Examples of the light source are a metal halide lamp, a high-pressure mercury lamp, an xenon lamp, a halogen lamp, a pulse xenon lamp, a black light (wavelength: approximately 365 nm), an ultraviolet light emitting diode (wavelength: approximately 375 nm), a light-emitting diode lamp (wavelength: approximately 405 nm), and the like.

The second method includes coating a thermosetting resin composition (i.e., an example of the above-described electrically insulating resin composition of the side surface resin members 10A) on the side surfaces S30 of the laminate sheet 30 so as to form electrically insulating coated films, and drying the electrically insulating coated films so as to form the side surface resin members 10A.

### (1.3.5) Welding Step

In the welding step, the terminals 20 and the laminate sheet 30 are welded by a heat bar. The laminated battery 1A is thereby obtained. The heating conditions (e.g., heating temperature, heating time, applied pressure, and the like) of the heat bar are selected appropriately in accordance with the material of the laminate sheet 30 and the like.

### (1.3.6) Operation and Effects

As described above, the method of manufacturing a laminated battery of the first embodiment includes a forming step and a welding step.

Due thereto, the method of manufacturing a laminated battery of the first embodiment can manufacture the laminated battery 1A.

### (2) Second Embodiment

### (2.1) Laminated Battery

Laminated battery 1B of a second embodiment of the present disclosure mainly is similar to the laminated battery 1A of the first embodiment, other than the fact that laminated battery 1B has resin films that function as the side surface resin members.

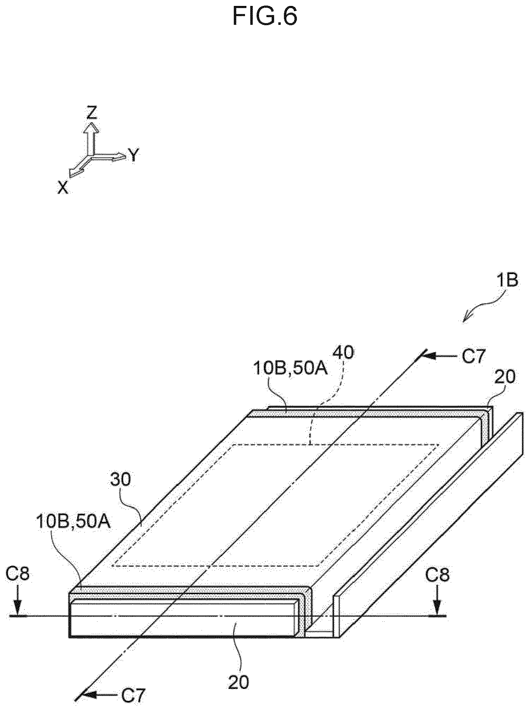

As illustrated in Fig. 6, the laminated battery 1B has side surface resin members 10B, the pair of terminals 20, the laminate sheet 30, the electrode body 40, and resin films 50A (hereinafter also called "tab films 50A"). The side surface resin members 10B include the tab films 50A. The side surface resin members 10B cover the entireties of the side surfaces S30 of the laminate sheet 30. The pair of terminals 20 and the laminate sheet 30 are directly welded via the tab films 50A.

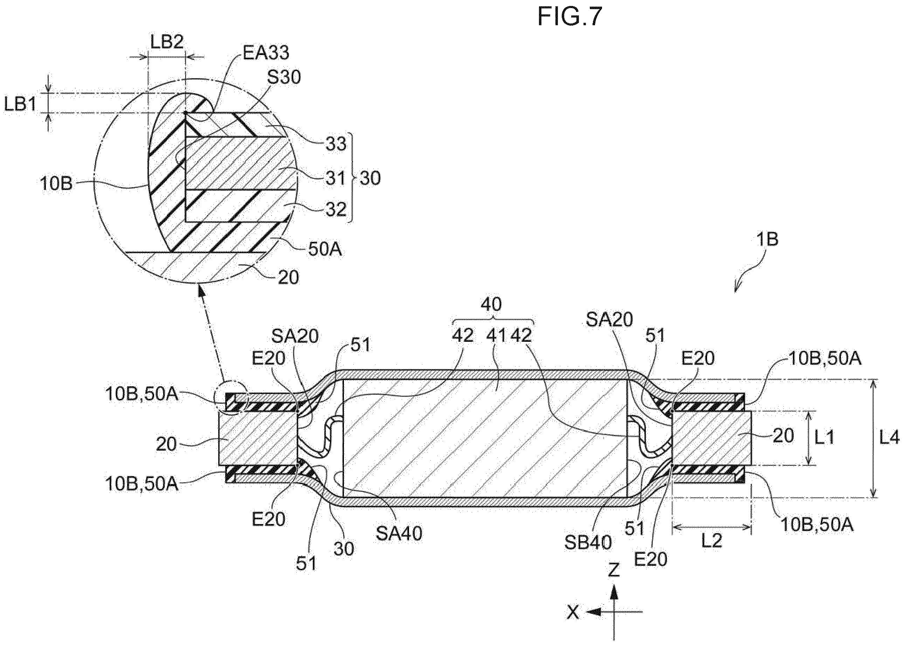

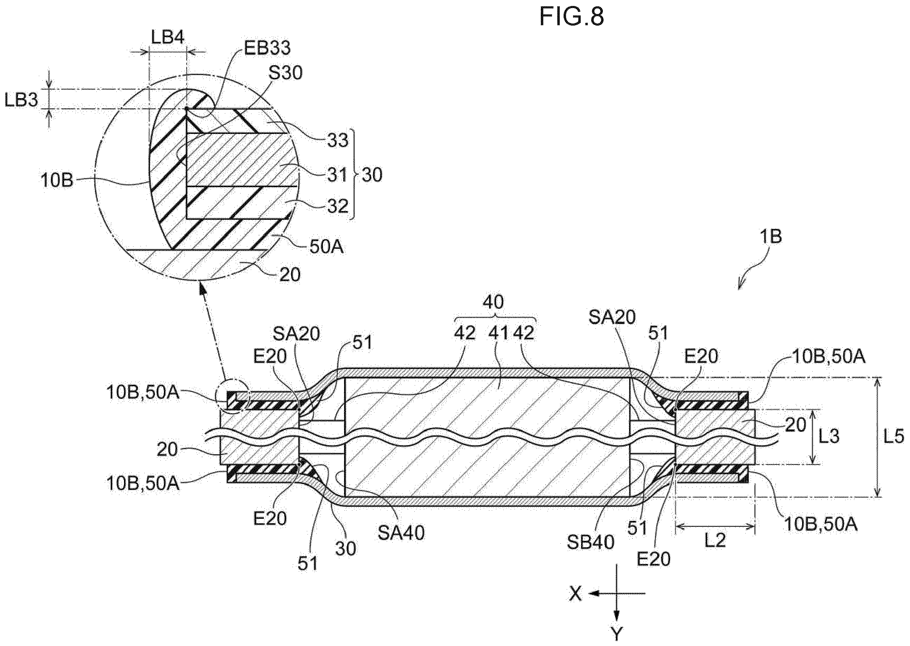

As illustrated in Fig. 7 and Fig. 8, the side surfaces S30 of the laminate sheet 30 and the outer surfaces SB20 of the terminals 20 are disposed so as to not be in the same planes.

### (2.1.1) Side Surface Resin Members

As illustrated in Fig. 7 and Fig. 8, the side surface resin members 10B electrically insulate the terminals 20 and the metal layer 31 of the side surfaces S30 of the laminate sheet 30. The side surface resin members 10B cover the metal layer 31 of the side surfaces S30 of the laminate sheet 30. The side surface resin members 10B are welded respectively to the first resin layer 32 and the second resin layer 33 of the side surfaces S30 of the laminate sheet 30.

As illustrated in Fig. 7, in a cross-section of the laminated battery 1B that is cut along the front-rear direction (the X-axis direction) orthogonal to the front surface SA40 of the electrode body 40, the size of the side surface resin member 10B is preferably the following size.

In the vertical direction (the Z-axis direction), length LB1 (see Fig. 7) of the region of the side surface resin member 10B, which projects-out from the end EA33 that is at side opposite the electrode body 40 of the second resin layer 33, is preferably less than 0.1 mm, and is more preferably 0 mm.

In the front-rear direction (the X-axis direction), length LB2 (see Fig. 7) of the side surface resin member 10B from the side surface S30 of the laminate sheet 30 is preferably less than 1 mm from the standpoint of efficiently connecting the laminated batteries 1B together and the like.

As illustrated in Fig. 8, in a cross-section of the laminated battery 1B that is cut along the front-rear direction (the X-axis direction) orthogonal to the front surface SA40 of the electrode body 40, the size of the side surface resin member 10B is preferably the following size.
In the left-right direction (the Y-axis direction), length LB3 (see Fig. 8) of the region of the side surface resin member 10B, which projects-out from the end EB33 that is at side opposite the electrode body 40 of the second resin layer 33, is preferably less than 0.1 mm and is more preferably 0 mm. The length LB3 may be the same as or may be different than the length LB1 (see Fig. 7).
In the front-rear direction (the X-axis direction), length LB4 (see Fig. 8) of the side surface resin member 10B from the side surface S30 of the laminate sheet 30 is preferably less than 1 mm from the standpoint of efficiently connecting the laminated batteries 1B together and the like. The length LB4 may be the same as or may be different than the length LB2 (see Fig. 7).

The side surface resin member 10B is formed from the tab film 50A.

### (2.1.2) Tab Film

The tab films 50A have the function of electrically insulating the laminate sheet 30 and the terminals 20, and the function of joining the laminate sheet 30 and the terminals 20, and the function of the side surface resin members 10B.

As illustrated in Fig. 7 and Fig. 8, the tab film 50A has an inner side excess resin portion 51. The inner side excess resin portion 51 protrudes-out toward the electrode body 40 side from the entire periphery of end E20, which is at electrode body 40 side, of the terminal 20. The inner side excess resin portion 51 is formed, for example, due to the molten material of the tab film 50A being pushed-out from the end E20 at electrode body 40 side of the terminal 20 at the time when the terminal 20 and the laminate sheet 30 are thermocompression bonded. The inner side excess resin portion 51 may be welded to the laminate sheet 30 (specifically, the first resin layer 32).

The tab film 50A is formed from a third thermoplastic resin composition. The third thermoplastic resin composition includes a third thermoplastic resin. The third thermoplastic resin is not particularly limited, and examples thereof are the same as those exemplified as the first thermoplastic resin. Thereamong, it is preferable that the third thermoplastic resin contains a resin that is compatible with the first thermoplastic resin. Due thereto, it is easy to fuse the tab films 50A and the first resin layer 32. "Compatible" means, in an atmosphere in which the first thermoplastic resin and the third thermoplastic resin are melted, the first thermoplastic resin and the third thermoplastic resin mix together without separating. The resin that is compatible with the first thermoplastic resin is selected appropriately in accordance with the type of the first thermoplastic resin. In particular, from the standpoint of improving the adhesion with the terminals 20, it is more preferable that the third thermoplastic resin contains acid-modified polypropylene. In a case in which the third thermoplastic resin contains acid-modified polypropylene, the first thermoplastic resin preferably contains non-modified polypropylene. Acid-modified polypropylene has excellent metal adhesion. Non-modified polypropylene has poor metal adhesion. Therefore, in a case in which the third thermoplastic resin contains acid-modified polypropylene and the first thermoplastic resin contains non-modified polypropylene, the tab films 50A and the first resin layer 32 are welded, and the occurrence of welding of the first resin layer 32 and the electrode body 40 is prevented. As needed, the third thermoplastic resin composition may contain a compounding agent. Examples of compounding agents are the same as those exemplified as compounding agents of the first thermoplastic resin composition.

### (2.1.3) Operation and Effects

As described with reference to Fig. 6 through Fig. 8, the laminated battery 1B has the electrode body 40, the pair of terminals 20, the laminate sheet 30, and the side surface resin members 10B. The pair of terminals 20 and the laminate sheet 30 are welded. The side surface resin members 10B cover the metal layer 31 of the side surfaces S30 of the laminate sheet 30.

Due thereto, in the same way as the laminated battery 1A, at laminated battery 1B, the structural efficiency can be improved over that of a conventional laminated battery.

As described with reference to Fig. 6 through Fig. 8, at laminated battery 1B, the pair of terminals 20 and the laminate sheet 30 are fused via the tab films 50A.
Due thereto, the mass producibility of the laminated battery 1B is excellent.

As described with reference to Fig. 6 through Fig. 8, at laminated battery 1B, the side surface resin members 10B include the tab films 50A.
Due thereto, at laminated battery 1B, the electrical insulation between the pair of terminals 20 and the metal layer 31 of the side surfaces S30 of the laminate sheet 30 is ensured by the tab films 50A.

As described with reference to Fig. 6 through Fig. 8, at laminated battery 1B, the tab films 50A have the inner side excess resin portions 51 that project out from the ends E20 that are at electrode body 40 sides of the pair of terminals 20. In other words, the laminated battery 1B has spaces that are at sides, which are opposite the laminate sheet 30 sides, of the inner side excess resin portions 51 in the thickness direction of the tab films 50A (the Z-axis direction or the Y-axis direction). Due thereto, at the time when the laminated battery 1B is exposed to high temperatures, it is easy for the inner side excess resin portions 51 to volumetrically expand toward the sides, which are opposite the laminate sheet 30 sides, of the inner side excess resin portions 51. Namely, the stress that the laminate sheet 30 receives due to volumetric expansion of the inner side excess resin portions 51 is mitigated more than in conventional structures. As a result, at laminated battery 1B, the structural reliability of the laminate sheet 30 is excellent even when the laminated battery 1B is exposed to a high temperature environment.

### (2.2) Method of Manufacturing Laminated Battery

The method of manufacturing a laminated battery of the second embodiment of the present disclosure is a method of manufacturing the laminated battery 1B. The method of manufacturing a laminated battery of the second embodiment mainly is similar to the method of manufacturing a laminated battery of the first embodiment, except that the method of the second embodiment has a placement step and a deforming step instead of the forming step. The method of manufacturing a laminated battery of the second embodiment includes a preparation step, a placement step, a covering step, a fixing step, a welding step and a deforming step. In the second embodiment, the preparation step, the placement step, the covering step, the fixing step, the welding step, and the deforming step are executed in that order.

### (2.2.1) Preparation Step

In the preparation step, a structural body and the one laminate sheet 30 are prepared. The structural body has the electrode body 40 and the pair of terminals 20 that are electrically connected to the electrode body 40. It suffices for the methods of preparing the structural body and the laminate sheet 30 respectively to be known methods.

### (2.2.2) Placement Step

In the placement step, the tab films 50A are placed on the pair of terminals 20 such that tab films 50A have projecting portions 52 that project out from the side surfaces S30 of the laminate sheet 30. A structural body with tab films is thereby obtained. It suffices for the method of placing the tab films 50A to be a known method.

### (2.2.3) Covering Step

In the covering step, the laminate sheet 30 is bent, and the electrode body 40 included in the structural body with tab films is covered by the one laminate sheet 30. The method of covering the electrode body 40 by the laminate sheet 30 is not particularly limited. For example, the method may be a method in which creases that match the shape of the electrode body 40 are formed in the laminate sheet 30 by a known method, and the laminate sheet 30 is folded along the creases.

### (2.2.4) Fixing Step

In the fixing step, a region at which the end portions of the folded laminate sheet 30 overlap one another (hereinafter also called "overlapping region") is thermocompression bonded, and the shape of the laminate sheet 30, which is in a state of covering the electrode body 40, is fixed. It suffices for the method of thermocompression bonding the overlapping region to be a known method, and an example is a method using a heat bar.

### (2.2.5) Welding Step

In the welding step, the terminals 20 and the laminate sheet 30 are welded by a heat bar. The heating conditions (e.g., heating temperature, heating time, applied pressure, and the like) of the heat bar are selected appropriately in accordance with the material of the laminate sheet 30 and the like.

### (2.2.6) Deforming Step

In the deforming step, by utilizing the residual heat of the tab films 50A at the time when the pair of terminals 20 and the laminate sheet 30 are welded (i.e., the heat that remains at tab films 50A after the welding step has been carried out), the projecting portions 52 of the tab films 50A are deformed, and the side surface resin members 10B are formed. The laminated battery 1B is thereby obtained.

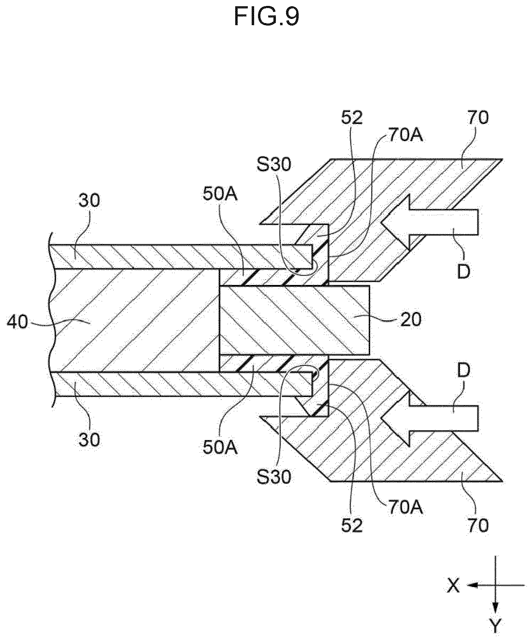

The method of deforming the projecting portion 52 of the tab film 50A is not particularly limited, and examples are a method using a jig 70 and the like. An example of a method using the jig 70 is illustrated in Fig. 9. In the method that uses the jig 70 and is illustrated in Fig. 9, in the state in which the temperature of the tab film 50A is a temperature that is greater than or equal to the glass transition temperature of the third thermoplastic resin, the projecting portion 52 of the tab film 50A is pushed-in in the front side direction (the X-axis positive direction) by using the jig 70. Due thereto, the projecting portion 52 of the tab film 50A can be deformed so as to cover the metal layer 31 of the side surface S30 of the laminate sheet 30. By adjusting the shape of contacting surface 70A of the jig 70 that contacts the projecting portion 52, the shape of the side surface resin member 10B can be adjusted.

### (2.2.7) Operation and Effects

As described with reference to Fig. 9, the method of manufacturing a laminated battery of the second embodiment includes a placement step and a deforming step.

Due thereto, the method of manufacturing a laminated battery of the second embodiment can efficiently manufacture the laminated battery 1B.

### (3) Third Embodiment

### (3.1) Laminated Battery

Laminated battery 1C of a third embodiment of the present disclosure mainly is similar to the laminated battery 1B of the second embodiment, other than the fact that, in the laminated battery 1C, the resin films and the side surface resin members are different members.

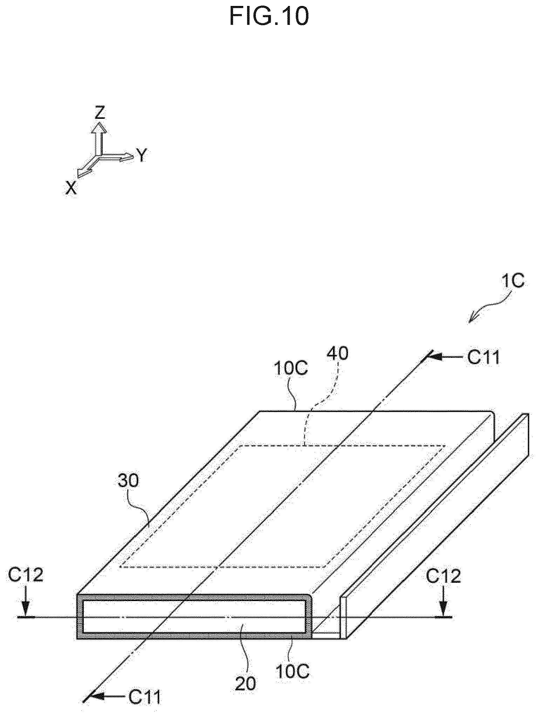

As illustrated in Fig. 10, the laminated battery 1C has side surface resin members 10C, the pair of terminals 20, the laminate sheet 30, the electrode body 40, and resin films 50B (hereinafter also called "tab films 50B"). The side surface resin members 10C do not include the tab films 50B. The side surface resin members 10C cover the entireties of the side surfaces S30 of the laminate sheet 30. The pair of terminals 20 and the laminate sheet 30 are directly welded via the tab films 50B.

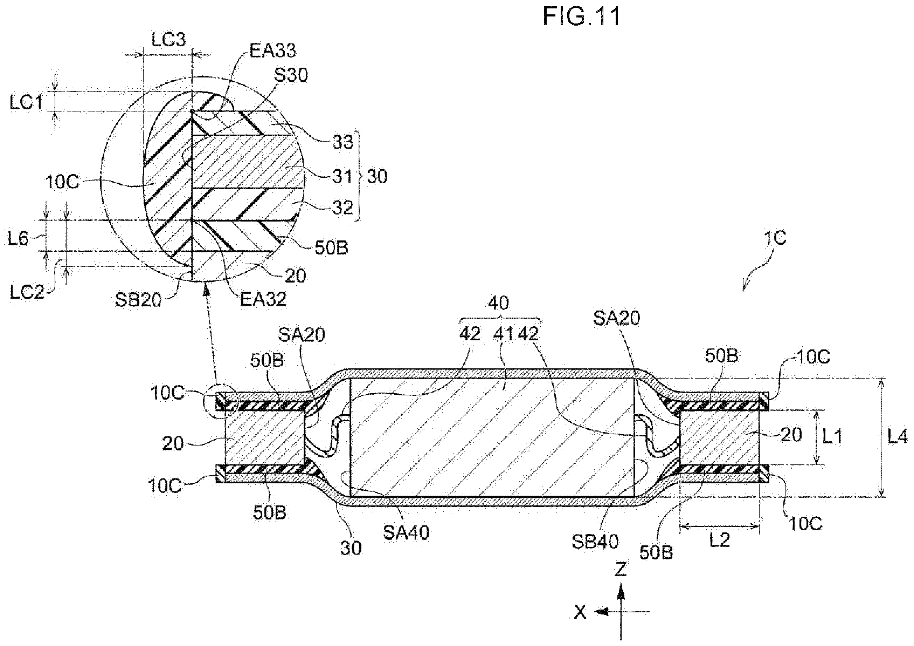

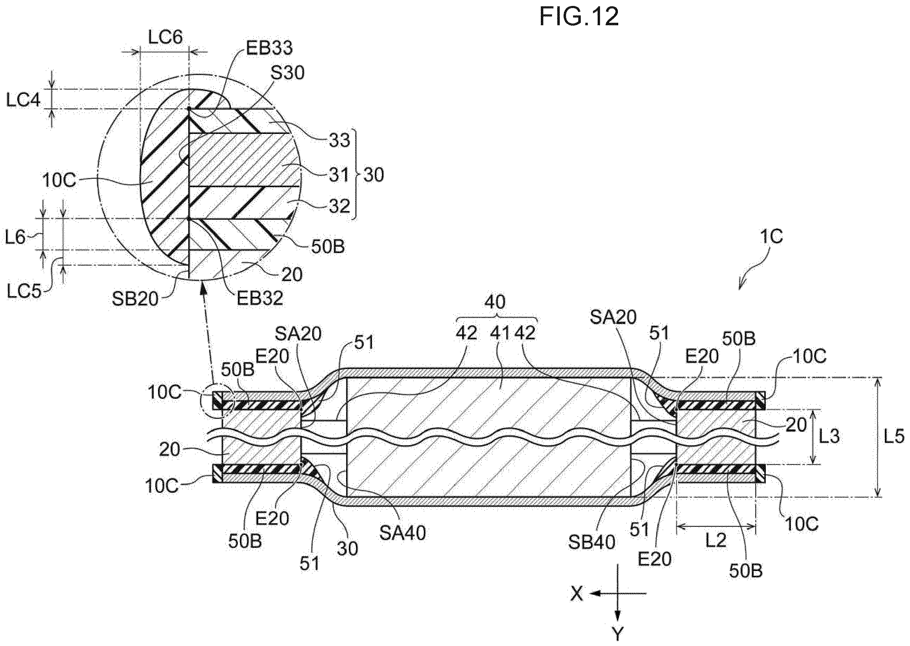

As illustrated in Fig. 11 and Fig. 12, the side surfaces S30 of the laminate sheet 30 and the outer surfaces SB20 of the terminals 20 are disposed so as to be in the same planes.

### (3.1.1) Side Surface Resin Members

As illustrated in Fig. 11 and Fig. 12, the side surface resin members 10C electrically insulate the terminals 20 and the metal layer 31 of the side surfaces S30 of the laminate sheet 30. The side surface resin members 10C cover the metal layer 31 of the side surfaces S30 of the laminate sheet 30. The side surface resin members 10C are welded respectively to the first resin layer 32 and the second resin layer 33 of the side surfaces S30 of the laminate sheet 30.

As illustrated in Fig. 11, in a cross-section of the laminated battery 1C that is cut along the front-rear direction (the X-axis direction) orthogonal to the front surface SA40 of the electrode body 40, the size of the side surface resin member 10C is preferably the following size.
In the vertical direction (the Z-axis direction), length LC1 (see Fig. 11) of the region of the side surface resin member 10C, which projects-out from the end EA33 that is at side opposite the electrode body 40 of the second resin layer 33, is preferably less than 0.1 mm, and is more preferably 0 mm.
In the vertical direction (the Z-axis direction), length LC2 (see Fig. 11) of the region of the side surface resin member 10C that projects-out from the end EA32 at electrode body 40 side of the first resin layer 32 is preferably greater than or equal to thickness L6 (see Fig. 11) of the tab film 50B, from the standpoint of suppressing protruding-out of the tab film 50B from the outer surface S20 of the terminal 20 and the like. By suppressing protruding-out of the tab film 50B from the outer surface S20 of the terminal 20, the occurrence of problems in other steps (e.g., the region where the tab film 50B protrudes-out from the outer surface S20 of the terminal 20 getting in the way of the electrical connection of the respective laminated batteries 1C, and the like) can be suppressed.
In the front-rear direction (the X-axis direction), length LC3 (see Fig. 11) of the side surface resin member 10C from the side surface S30 of the laminate sheet 30 is preferably less than 1 mm from the standpoint of efficiently connecting the laminated batteries 1C together and the like.

As illustrated in Fig. 12, in a cross-section of the laminated battery 1C that is cut along the front-rear direction (the X-axis direction) orthogonal to the front surface SA40 of the electrode body 40, the size of the side surface resin member 10C is preferably the following size.
In the left-right direction (the Y-axis direction), the length LC4 (see Fig. 12) of the region of the side surface resin member 10C, which projects-out from the end EB33 that is at side opposite the electrode body 40 of the second resin layer 33, is preferably less than 0.1 mm, and is more preferably 0 mm. The length LC4 may be the same as or may be different than the length LC1 (see Fig. 11).
In the front-rear direction (the X-axis direction), length LC5 (see Fig. 12) of the region of the side surface resin member 10C that projects-out from the end EB32 at electrode body 40 side of the first resin layer 32 is preferably greater than or equal to the thickness L6 (see Fig. 12) of the tab film 50B, from the standpoint of suppressing protruding-out of the tab film 50B from the outer surface S20 of the terminal 20, and the like. Length LC5 may be the same as or may be different than the length LC2 (see Fig. 11).
In the front-rear direction (the X-axis direction), length LC6 (see Fig. 11) of the side surface resin member 10C from the side surface S30 of the laminate sheet 30 is preferably less than 1 mm from the standpoint of efficiently connecting the laminated batteries 1C together and the like. The length LC6 may be the same as or may be different than the length LC3 (see Fig. 11).

Materials of the side surface resin members 10C are the same as those exemplified as materials of the side surface resin members 10A.

### (3.1.2) Tab Film

The tab films 50B have the function of electrically insulating the laminate sheet 30 and the terminals 20, and the function of joining the laminate sheet 30 and the terminals 20.

The tab films 50B are the same as the tab films 50A in the second embodiment, other than the fact that tab films 50B do not function as the side surface resin members.

### (3.1.3) Operation and Effects

As described with reference to Fig. 10 through Fig. 12, the laminated battery 1C has the electrode body 40, the pair of terminals 20, the laminate sheet 30, and the side surface resin members 10C. The pair of terminals 20 and the laminate sheet 30 are welded. The side surface resin members 10C cover the metal layer 31 of the side surfaces S30 of the laminate sheet 30.

Due thereto, in the same way as the laminated battery 1A, at laminated battery 1C, the structural efficiency can be improved over that of a conventional laminated battery.

As described with reference to Fig. 10 through Fig. 12, at laminated battery 1C, the pair of terminals 20 and the laminate sheet 30 are fused via the tab films 50B.
Due thereto, the mass producibility of the laminated battery 1C is excellent.

As described with reference to Fig. 10 through Fig. 12, at laminated battery 1C, the side surface resin members 10C do not include the tab films 50B.
Due thereto, at laminated battery 1C, the electrical insulation between the pair of terminals 20 and the metal layer 31 of the side surfaces S30 of the laminate sheet 30 is ensured by the side surface resin members 10C.

As described with reference to Fig. 10 through Fig. 12, at laminated battery 1C, the tab films 50B have the inner side excess resin portions 51 that project out from the ends E20 that are at electrode body 40 sides of the pair of terminals 20.
Due thereto, in the same way as the laminated battery 1B, at laminated battery 1C, the structural reliability of the laminate sheet 30 is excellent even when the laminated battery 1C is exposed to a high temperature environment.

### (3.2) Method of Manufacturing Laminated Battery

The method of manufacturing a laminated battery of the third embodiment of the present disclosure is a method of manufacturing the laminated battery 1C. The method of manufacturing a laminated battery of the third embodiment mainly is similar to the method of manufacturing a laminated battery of the first embodiment, except that the method of the third embodiment further has a placement step. The method of manufacturing a laminated battery of the third embodiment includes a preparation step, a placement step, a covering step, a fixing step, a forming step and a welding step. In the third embodiment, the preparation step, the placement step, the covering step, the fixing step, the forming step and the welding step are executed in that order.

### (3.2.1) Preparation Step

In the preparation step, a structural body and the one laminate sheet 30 are prepared. The structural body has the electrode body 40 and the pair of terminals 20 that are electrically connected to the electrode body 40. It suffices for the methods of preparing the structural body and the laminate sheet 30 respectively to be known methods.

### (3.2.2) Placement Step

In the placement step, the tab films 50B are placed on the pair of terminals 20. A structural body with tab films is thereby obtained. It suffices for the method of placing the tab films 50B to be a known method.

### (3.2.3) Covering Step

In the covering step, the laminate sheet 30 is bent, and the electrode body 40 contained in the structural body with tab films is covered by the one laminate sheet 30. The method of covering the electrode body 40 by the laminate sheet 30 is not particularly limited. For example, the method may be a method in which creases that match the shape of the electrode body 40 are formed in the laminate sheet 30 by a known method, and the laminate sheet 30 is folded along the creases.

### (3.2.4) Fixing Step

In the fixing step, the region at which the end portions of the folded laminate sheet 30 overlap one another (hereinafter also called "overlapping region") is thermocompression bonded, and the shape of the laminate sheet 30, which is in a state of covering the electrode body 40, is fixed. It suffices for the method of thermocompression bonding the overlapping region to be a known method, and an example is a method using a heat bar.

### (3.2.5) Forming Step

In the forming step, the side surface resin members 10C are formed at side surfaces S30 of the laminate sheet 30. Examples of the method of forming the side surface resin members 10A are the same as those exemplified as the forming method in the forming step of the first embodiment.

At this time, it is preferable that the length LC2 (see Fig. 11) and the length LC4 (see Fig. 12) of the side surface resin members 10C are respectively greater than or equal to the thickness L6 (see Fig. 11 and Fig. 12) of the tab film 50B. Due thereto, in the welding step, the side surface resin members 10C function as walls that suppress the molten material of the tab films 50B being pushed-out by the side surfaces S30 of the laminate sheet 30. By adjusting the length LC2 (see Fig. 11) and the length LC4 (see Fig. 12) respectively of the side surface resin members 10C in this way, the amount of the molten material of the tab films 50B that protrudes-out from the outer surfaces S20 of the terminals 20 can be adjusted. As a result, the tab films 50B protruding-out from the outer surfaces S20 of the terminals 20 is suppressed.

### (3.2.6) Welding Step

In the welding step, the terminals 20 and the laminate sheet 30 are welded by a heat bar. The heating conditions (e.g., heating temperature, heating time, applied pressure, and the like) of the heat bar are selected appropriately in accordance with the material of the laminate sheet 30 and the like.

### (3.2.7) Operation and Effects

As described above, the method of manufacturing a laminated battery of the third embodiment includes a placement step and a forming step.

Due thereto, the method of manufacturing a laminated battery of the third embodiment can efficiently manufacture the laminated battery 1C.

### (4) Fourth Embodiment

Battery stack 2B of a fourth embodiment of the present disclosure is the same as the battery stack 2A of the first embodiment, except for the fact that the shape of the inter-battery connecting terminals is different.

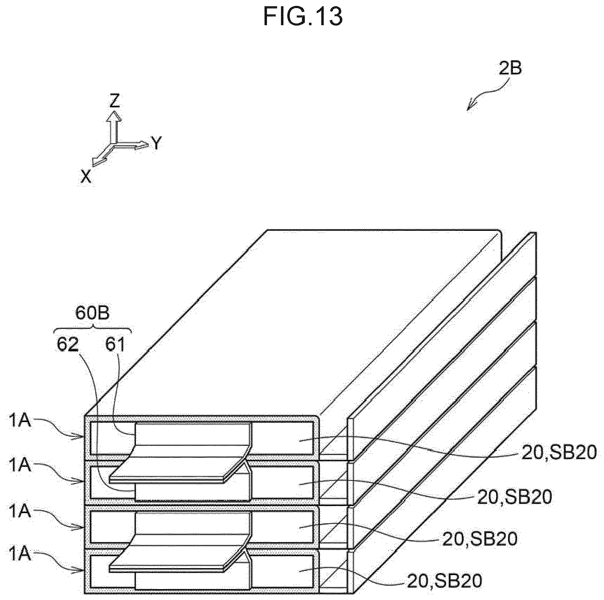

As illustrated in Fig. 13, the battery stack 2B has the plural laminated batteries 1A and plural inter-battery connecting terminals 60B. The plural inter-battery connecting terminals 60B are electrically connected to the terminals 20, and connect the plural laminated batteries 1A in series.

The inter-battery connecting terminals 60B are parts (bus bars) for electrically connecting the plural laminated batteries 1A in series.
The inter-battery connecting terminal 60B has a first terminal part 61 and a second terminal part 62. The first terminal part 61 is a plate-shaped structure that is bent in an L-shape. The first terminal part 61 is electrically connected to one of the pair of terminals 20 included in the laminated battery 1A. Hereinafter, the laminated battery 1A to which the first terminal part 61 is electrically connected is called the "battery with the first terminal part". The second terminal part 62 is a plate-shaped structure that is bent in an L-shape. The second terminal part 62 is electrically connected to one of the pair of terminals 20 that is included in the laminated battery 1A that is adjacent to the battery with the first terminal part among the plural laminated batteries 1A. Hereinafter, the laminated battery 1A to which the second terminal part 62 is electrically connected is called the "battery with the second terminal part". The first terminal part 61 and the second terminal part 62 are electrically connected.
The first terminal part 61 is mounted to the outer surface SB20 of the terminal 20 of the battery with the first terminal part. The second terminal part 62 is mounted to the outer surface SB20 of the terminal 20 of the battery with the second terminal part. The first terminal part 61 is mounted to the second terminal part 62. Methods of mounting the first terminal part 61 and the second terminal part 62 respectively are not particularly limited, and examples thereof are methods that are the same as the methods exemplified as methods of mounting the inter-battery connecting terminals 60A of the first embodiment.

As described with reference to Fig. 13, the battery stack 2B has the plural laminated batteries 1A and the plural inter-battery connecting terminals 60B. The inter-battery connecting terminals 60B have the first terminal parts 61 and the second terminal parts 62.
Due thereto, the mass producibility of the battery stack 2B is better than in a case in which the inter-battery connecting terminals 60B do not have the first terminal parts 61 and the second terminal parts 62.

### (5) Modified Examples

In the first embodiment through the fourth embodiment, the electrode body 40 has the plural unit electrode bodies 41, but the electrode body 40 may have one unit electrode body 41. In the first embodiment through the fourth embodiment, the unit electrode body 41 has a solid electrolyte layer, but the unit electrode body 41 may use a non-aqueous electrolyte liquid instead of a solid electrolyte layer.

In the first embodiment through the fourth embodiment, the side surface members are terminals, but do not have to be terminals. For example, the side surface member may be a metal cover than does not function as a terminal. The metal cover may have an inter-battery connecting terminal at exterior of the laminated battery, and a through-hole for electrical connection with the terminal of the laminated battery.

In the first embodiment through the fourth embodiment, the facing surfaces of the terminals are electrically connected to the electrode body, but do not have to be electrically connected to the electrode body.

In the first embodiment through the fourth embodiment, the pair of terminals face one another via the electrode body, but do not have to face one another via the electrode body.

In the first embodiment through the fourth embodiment, the laminated battery is a laminated lithium secondary battery that uses a solid electrolyte. However, the laminated battery may be a secondary battery such as a nickel-hydrogen battery or the like.

In the first embodiment through the fourth embodiment, the shape of the terminals is rectangular parallelopiped, but does not have to be rectangular parallelopiped.

In the first embodiment through the fourth embodiment, the length L4 (see Fig. 2) is longer than the length L1 (see Fig. 2), but the length L4 may be the same as or may be shorter than the length L1.

In the second embodiment and the third embodiment, the tab film 50A and the tab film 50B have the inner side excess resin portion 51, but do not have to have the inner side excess resin portion 51.

In the first embodiment, the inter-battery connecting terminal is a single plate-shaped structure. However, the shape of the inter-battery connecting terminal is not particularly limited provided that it is a shape that connects the plural laminated batteries 1A in series. In the fourth embodiment, the first terminal part and the second terminal part respectively are plate-shaped structures that are bent in L-shapes. However, the respective shapes of the first terminal part and the second terminal part are not particularly limited provided that they are shapes that connect the plural laminated batteries 1A in series and electrically connect the first terminal parts and the second terminal parts.

## Claims

1. A laminated battery comprising:
an electrode body;
side surface members disposed at side surfaces of the electrode body;
a laminate sheet covering the electrode body; and
side surface resin members mounted to side surfaces, which are at side surface member sides, of the laminate sheet,
wherein the side surface members and the laminate sheet are welded,
the laminate sheet has a metal layer, and
the side surface resin members cover the metal layer of the side surfaces of the laminate sheet.

2. The laminated battery of claim 1, wherein the side surface members and the laminate sheet are welded directly.

3. The laminated battery of claim 1, further comprising resin films disposed between the side surface members and the laminate sheet,
wherein the side surface members and the laminate sheet are welded via the resin films.

4. The laminated battery of claim 3, wherein the side surface resin members include the resin films.

5. The laminated battery of claim 3, wherein the side surface resin members do not include the resin films.

6. The laminated battery of claim 3, wherein the resin films have inner side excess resin portions that project out from ends, which are at electrode body sides, of the side surface members.

7. The laminated battery of claim 1, wherein:
the electrode body includes at least one unit electrode body, and
the unit electrode body is formed by a positive electrode collector, a positive electrode layer, an electrolyte layer, a negative electrode layer and a negative electrode collector being layered in that order.

8. The laminated battery of any one of claims 1 through 7, wherein:
the side surface members are terminals,
the terminals have facing surfaces that face the side surfaces of the electrode body, and
the facing surfaces are electrically connected to the electrode body.

9. The laminated battery of claim 8, comprising a pair of the terminals that face one another via the electrode body.

10. A battery stack comprising:
a plurality of the laminated batteries of claim 9 that are stacked along a direction parallel to the side surfaces of the electrode body; and
a plurality of inter-battery connecting terminals that are electrically connected to the terminals, and that connect the plurality of laminated batteries in series.

11. A method of manufacturing a laminated battery, wherein:
the laminated battery has:
an electrode body;
side surface members disposed at side surfaces of the electrode body;
a laminate sheet covering the electrode body; and
side surface resin members mounted to side surfaces, which are at side surface member sides, of the laminate sheet,
the side surface members and the laminate sheet are welded directly, and
the laminate sheet has a metal layer,
the method comprising:
forming the side surface resin members, which cover the metal layer of the side surfaces of the laminate sheet, at the side surfaces of the laminate sheet; and
welding the side surface members and the laminate sheet by a heat bar.

12. A method of manufacturing a laminated battery, wherein:
the laminated battery has:
an electrode body;
side surface members disposed at side surfaces of the electrode body;
a laminate sheet covering the electrode body; and
side surface resin members mounted to side surfaces, which are at side surface member sides, of the laminate sheet,
the side surface resin members include resin films disposed between the side surface members and the laminate sheet,
the side surface members and the laminate sheet are welded via the resin films,
the laminate sheet has a metal layer, and
the side surface resin members cover the metal layer of the side surfaces of the laminate sheet,
the method comprising:
placing the resin films on the side surface members such that the resin films have projecting portions that project out from the side surfaces of the laminate sheet;
welding the side surface members and the laminate sheet via the resin films by a heat bar; and
deforming the projecting portions by utilizing residual heat of the resin films at a time when the side surface members and the laminate sheet are welded, and forming the side surface resin members.
